# EUROPEAN PATENT APPLICATION

(11) **EP 0 781 742 A1**
(43) Date of publication of application: **02.07.1997**
(21) Application number: 95932190.2
(22) Date of filing: 20.09.1995
(51) Int. Cl.: C05F 15/00

(54) **VEGETABLE FIBER PLANTED ORGANIC CRUDE FERTILIZER, METHOD OF MANUFACTURING THE SAME, AND TREATMENT APPARATUS FOR THE SAME**

(30) Priority: 20.09.1994 JP 253056/94; 17.01.1995 JP 5310/95; 18.09.1995 JP 238595/95
(71) Applicant: Konishi, Toshiaki, Kobe-shi, Hyogo 653 (JP); Hashimoto, Kiyofumi, Kobe-shi, Hyogo 651-22 (JP)
(72) Inventor: HASHIMOTO, Kiyofumi, Hyogo 651-22 (JP); MATSUMOTO, Tetsuro Takasagoseisakusho, Takasago-shi Hyogo 676 (JP)
(74) Representative: Vollnhals, Aurel, Dipl.-Ing.
(86) International application number: JP9501892
(87) International publication number: WO9609270

(57) **Abstract**

The present invention is used for the production of pellet-shaped organic fertilizer, compost material using the pressure and kneading action of a rotating screw device, and does not require lengthy fermentation processing or equipment such as a boiler, or control system therefor etc.. It is characterized by introducing plant fiber material and chopped organic matter into a casing provided with a rotating screw; applying pressure to and kneading the organic matter and plant fiber material; ripping apart and grinding up said organic matter and said plant fiber material through the interaction thereof with the edges of a plurality of grooves formed in the inner surface of the casing in the direction of the axis of the casing, to thereby stuff said plant fiber material into said organic matter; and extruding it through the forming holes of the casing in specified amounts using a cutter, to form it into pellets.

## Description

### FIELD OF THE INVENTION

The present invention relates to an organic raw fertilizer, a method for the production thereof, as well as processing equipment suited to the production of raw fertilizers and compost materials.

### BACKGROUND OF THE INVENTION

The basic compost heap, which involves piling straw, barnyard manure, and adding a nitrogen component, fermentation agent etc. to bring the compost to maturation, is known as a conventional organic raw fertilizer and method for the production thereof (for example, see pages 55 to 97 of "Methods of making and using organic fertilizers" published by Nosangyoson Bunka Kyokai).

Furthermore, in recent years there has also been carried out research into methods of making organic fertilizers by maturing organic waste matter such as raw household rubbish, food leftovers, livestock excrement etc.. For example, there has been developed equipment for fermenting organic waste matter, which produces organic fertilizer in a total processing time of 48 hours by treating organic waste matter such as fishbones, sludge, beancurd refuse etc. to adjust its water content to about 60%, fermenting it at a temperature of about 60^{o}C, and finally drying it until it has a water content of about 15%. With this equipment, germs and pests are exterminated during the high temperature fermentation of the organic material through the use of agricultural microorganisms called actinomyces; backcross bacteria, produced through the treatment of beancurd refuse or dried beancurd refuse by mixing with actinomyces, is used in the adjustment of the water content; and hot water is used as the heat source with the aim of realizing a low cost and fully automated process (for example, see the middle section of page 21 of the December 1993 edition of "Gekkan Haikibutsu" published by Nippo Kabushiki Kaisha).

Furthermore, as a method of treating raw rubbish by mainly heat-drying, there is known a method, which involves causing the raw rubbish to rot by raising the temperature using heat from a boiler, promoting the decomposition of the raw rubbish through aerobic fermentation by causing putrefactive bacteria (natural bacteria found on organic material) to multiply in the presence of oxygen whilst controlling the temperature, stirring using a special blade, carrying out decomposition using a hot chelate, and thereafter carrying out sterilization and drying. The raw rubbish gradually dries via a rice gruel-like state, a porridge-like state and then a dough-like state, and after about ten hours, a sand-like soil improver is obtained without any adjustment of the water content or addition of a ferment bacillus (for example, see the middle and last paragraphs of page 23 of the December 1993 edition of "Gekkan Haikibutsu" published by Nippo Kabushiki Kaisha).

Furthermore, as a household device for destroying raw rubbish, there is known a device which naturally decomposes rubbish by bioactivity without creating compost, in which wood chips, which are a carrier for microorganisms, are preliminarily loaded into a decomposition bath. The temperature is kept at the ideal temperature of 25 to 40^{o}C for keeping the bioactivity to a fixed level; Then, whilst maintaining those conditions ideal for cultivating the microorganisms, such as the temperature, maintenance of humidity, supply of oxygen etc., mixing and crushing of the raw rubbish is carried out by the forward and backward rotation of mixing rotors having a plurality of blades fixed to a rotation axis, to cause the raw rubbish to be mixed into the wood chips (for example, see the top and middle paragraphs of page 26 of the December 1993 edition of "Gekkan Haikibutsu" published by Nippo Kabushiki Kaisha).

However, with the conventional methods of producing compost heap described above, there is the problem that even with the fastest of these methods, it takes seven weeks before the compost is ready due to the fact that cut back has to be carried out twice after piling, and there is the problem that there are restrictions which have to be observed when handling the compost at the time of transportation after the compost is ready, due to the fact that the compost is still maturing. Furthermore, with the fermentation apparatus for organic waste material, whose development has progressed in recent years, there is the problem, due to the fact that high temperature fermentation treatment is carried using actinomyces (agricultural microorganisms) whilst controlling the water content and whilst heating with hot water, that although the process can be said to be fully automated, it requires a total processing time of about 48 hours, and also requires a heat source such as a boiler or an electric heat source.

Furthermore, even with the method of obtaining a soil improver in which the decomposition is promoted by causing putrefactants, which are attached to the raw rubbish itself, to multiply by heating, without employing any ferment bacilli or water content adjustment, there is the problem that it takes ten hours for processing, and that large boiler equipment has to be provided for heating.

With respect to the household device for destroying rubbish, the fact that the rubbish is decomposed by microorganisms and destroyed, by providing a bio-hotbed comprising wood chips, and treating the rubbish whilst ensuring the necessary oxygen for the bioactivity, and keeping the temperature at the ideal temperature of 25 to 45^{o}C using a controller, leads to the problems that heating equipment needs to be provided, that time is required to destroy the rubbish, and that the product cannot be used as an organic fertilizer.

The present invention was made in light of the situation in the prior art. It solves the problems associated with the prior art, i.e. that a long processing time was required due to the use of the action of ferment bacilli to produce organic fertilizer from organic waste material, and that a control system and a heat source such as a boiler were required for the fermentation process. It also largely reduces the fermentation time for which a long period of time was required in the prior art methods of creating compost.

The objective of the present invention is to provide an organic raw fertilizer stuffed with plant fibers and a method and processing apparatus for the production thereof, with which fertilizer or compost material can be produced in pellet form in the space of a few minutes from organic waste material, without requiring heat source control such as a boiler or ferment bacilli etc..

### DISCLOSURE OF THE INVENTION

The organic raw fertilizer of the present invention is an organic raw fertilizer formed by kneading together 50 parts by weight of the object organic material, such as crushed fish bones and innards, 25 to 55 parts by weight, preferably 30 to 50 parts by weight, of plant fiber material such as dried straw, which has been crushed and which contains a large amount of lignin, cellulose fibers etc., and 0 to 20 parts by weight of rice bran; and then, at a temperature, preferably 80 to 90^{o}C, achieved through compression, mashing and forcibly stuffing the fibers contained in the plant fiber material into the object organic material, and forming the mixture into pellets.

In another embodiment of the present invention, the organic raw fertilizer of the present invention is an organic raw fertilizer formed by kneading together 50 parts by weight of crushed rotting organic matter, 25 to 55 parts by weight, preferably 30 to 50 parts by weight, of old paper such as newspaper which has been crushed and contains a large amount of cellulose fibers, and 0 to 20 parts by weight of rice bran; and then, at a temperature, preferably 80 to 90^{o}C, achieved through compression, mashing and forcibly stuffing the cellulose fibers contained in the old paper into the object organic material, and forming the mixture into pellets.

The method of producing organic raw fertilizer according to the present invention comprises the steps of: introducing plant fiber material and chopped object organic material into a cylindrical casing; pressurizing and kneading the plant fiber material and object organic material through the rotation of a rotation screw provided inside the casing; ripping and mashing the plant fiber material and object organic material through the interaction thereof with the edges of a plurality of grooves formed on the inner surface of the casing in the axial direction; conveying the material towards the forming die whilst stuffing the plant fiber material into the object organic material; restraining the rotation of the plant fiber material-containing object organic material by means of projections located in the vicinity of the inner side of the forming die; shaping the plant fiber material-containing object organic material into pellets by extruding specified amounts of the plant fiber material-containing object organic material through the forming holes by means of a cutter which rotates against the inner surface of the forming die.

In the above-described method of production, it is preferred that the internal diameter of the rotation chamber in which the cutter is located be formed to be larger than the internal diameter of the casing; that the forming holes which located towards the outer circumference of the forming die are formed at positions radially outwards of the inner surface of the casing; and that the object organic material which has been conveyed along the inner wall of the casing is extruded through the forming holes towards the outer circumference.

The processing equipment of the present invention is processing equipment which introduces plant fiber material and object organic material into a cylindrical casing, subjects the plant fiber material and object organic material to pressure, kneads it and conveys it towards the forward end of the casing through the rotation of a rotation screw provided inside the casing, and expels the material from the forward end of the casing. It comprises a forming die, provided at the front end and having forming holes, for forming the kneaded object organic material containing plant fiber material into pellets; a water supply device provided at the front end for supplying water into the casing; a cutter provided on the rotation screw axis to rotate against the inner surface of the forming die; and a plurality of projections projecting from the inner wall of the casing towards the space formed between the forming die and the forefront of the screw blade.

In the above-described processing equipment, it is preferred that the water outlet of the water supply device is positioned within 3 pitches from the end of the rotation screw. In this case, it is possible, for example, to position the water outlet of the water supply device such that it faces the space formed between the forming die and the forefront of the screw blade. However, if the number of pitches, N of the screw groove of the rotation screw is 7 or more, it is preferable to position the water outlet within up to N/2 pitches from the forefront of the rotation screw.

The water supply device comprises a pipe which passes through the casing; a water outlet provided at the casing side of this pipe; and a needle valve located within the pipe for adjusting the amount of flow of water. It is preferred that the water outlet is constructed from a circular partition plate which is closed and opened when the needle valve is moved forward and backward.

It is preferred that the projections are screwed onto the casing such that the amount by which they project into the inner of the casing can be adjusted. These projections may be constructed from a plate-shaped member whose flat surface lies parallel to the axis of the casing.

It is preferable that a plurality of straight or spiral grooves are formed in the axial direction on the inner wall of the casing of the above-described processing equipment. If in such a construction, the screw pitch of the rotation screw is formed to be denser towards the forefront thereof, and the above-described groove is located at regular intervals in the direction of the cross-section of the casing, then it is preferred that the water outlet of the water supply device be positioned within 3 pitches from the end of the screw, where the screw pitch is dense.

Furthermore, in the above-described processing equipment, the rotation screw may be constructed of a front rotation screw and a base rotation screw connected together. In this case, it is necessary that the screw phase of each is made to be in accord.

In the processing equipment of the present invention, the force of the spirally advancing rotation screw forces the plant fibers contained in the dried plant fiber material or the cellulose fibers contained in the old paper into the crushed object organic material whilst crushing and mashing them. Then, since the plant fibers stuffed into the object organic material improve the gas permeability of the decomposing matter, an active supply of oxygen can be realized. Together with the high compression, high temperature brought about by the compression force of the rotation screw, this causes the activity of putrefactive anaerobic bacteria to cease immediately. Thereafter, the cultivation of aerobic bacteria is assisted, and pellets of raw fertilizer whose decay has been rapidly stopped (even in the case of highly decomposable fish bones and innards) can be formed. At the time of forming the pellets, the rotation of the material is restrained by rotation restraining bars before the material is passed through the pellet forming holes of the grind plate, whereby smooth extrusion- forming is made possible.

According to the above-described invention, it is possible to obtain pellets of an organic raw fertilizer from rotting organic matter in the space of a few minutes without any need whatsoever for a heating device such as a boiler etc.. This raw fertilizer is naturally digested when fed into the ground; it contains large amounts of plant fiber, and is ideal as a soil improver.

Furthermore, if the processing equipment of the present invention is used to subject pruned branches to swelling-softening treatment, the structure of the plant fibers is crushed and softened, and the surface area thereof is largely increased with a consequent improvement in the gas and water permeability thereof, and thus the fermentation time can be shortened thereby making it possible to simply and easily produce compost material.

### BRIEF DESCRIPTION OF THE DRAWINGS

Figure 1 shows processing equipment used in a method of producing organic raw fertilizer according to the present invention;
Figure 2 is a cross-sectional view showing the key parts in the construction of the forward end of the casing shown in Figure 1;
Figure 3 is a vertical cross-section taken through line A-A in Figure 2;
Figure 4 is a vertical-cross-section taken through line B-B in Figure 2;
Figure 5 is an explanatory figure showing the rotation-stopping drag bars used in an embodiment of the present invention;
Figure 6 is an explanatory figure showing another example for the construction of the rotation-stopping drag bars;
Figure 7 is an explanatory figure showing another example for the construction of the rotation-stopping drag bars;
Figure 8 is an explanatory figure showing another example for the construction of the rotation-stopping drag bars;
Figure 9 is a cross-sectional view of the construction of the water supply valve used in an embodiment;
Figure 10 is a cross-sectional view showing the construction of the seal portions of the water supply valve;
Figure 11 is a cross-sectional view showing another construction for the seal portions of the water supply valve;
Figure 12 is a cross-sectional view showing another construction for the seal portions of the water supply valve;
Figure 13 is a cross-sectional view showing another construction for the seal portions of the water supply valve;
Figure 14 is a cross-sectional view showing the shape of the tip of the needle valve of the water supply valve;
Figure 15 is a cross-sectional view of a manually-operated water supply valve;
Figure 16 is a cross-sectional view of an automatically operated water supply valve;
Figure 17 is a frontal cross-sectional view showing the position of the water supply valve;
Figure 18 is a right-side cross-sectional view showing the position of the water supply valves;
Figure 19 is a left-side cross-sectional view showing the position of the water supply valves;
Figure 20 is a frontal cross-sectional view showing another example for the position of the water supply valves;
Figure 21 is an explanatory figure showing the conventional arrangement of pellet forming holes;
Figure 22 is an explanatory figure showing the arrangement of pellet forming holes in the embodiment;
Figure 23 is a frontal cross-sectional view showing the position of the pellet forming holes towards the outer circumference;
Figure 24 is a frontal cross-sectional view showing a casing having an radially enlarged section in the embodiment;
Figure 25 is a view of a cross-section taken through line H-H in Figure 24;
Figure 26 is a frontal cross-sectional view showing another example for the radially enlarged section;
Figure 27 is a frontal cross-sectional view of the embodiment in which a radially enlarged section and a grooved section is formed;
Figure 28 is a frontal cross-sectional view showing the construction of the liner in the embodiment;
Figure 29 is a view of a cross-section taken through line I-I in Figure 28;
Figure 30 is an explanatory figure showing the action of the liner at the time of forwards rotation;
Figure 31 is an explanatory figure showing the action of the liner at the time of backwards rotation;
Figure 32 is a cross-sectional view of another example of a liner;
Figure 33 is a cross-sectional view of another example of a liner;
Figure 34 is a cross-sectional view of another example of a liner;
Figure 35 is a cross-sectional view showing the shape of the inner wall of a conventional casing;
Figure 36 is a cross-sectional view showing the wear of the liner section, the arrow in this figure representing the direction of forward rotation of the screw, the respective cross-hatched portions of the screw and the casing projection representing wear portions;
Figure 37 is a frontal cross-sectional view showing a segmented liner in the embodiment;
Figure 38 is a view of a cross-section taken through line J-J in Figure 37;
Figure 39 is frontal cross-sectional view of another example of a segmented liner;
Figure 40 is a view of a cross-section taken through line K-K in Figure 39;
Figure 41 is a frontal view showing a segmented rotation screw in the embodiment; and
Figure 42 shows another example for the construction of the segmented rotation screw.

### BEST MODES OF CARRYING OUT THE INVENTION

Hereunder, embodiments of the present invention will be described with reference to the figures.

The term rotting organic matter, which constitutes the object organic matter in the present invention, refers to fish bones and innards, raw rubbish (i.e. leftover food, vegetables, fruit remains, oil dregs etc.), pruned branches, weeds etc.. The term plant fibers, as the plant fiber material, refers to bast fibers and cellulose fibers obtainable from plants, trees, branches, stalks etc.. The term fiber plants refers to dried straw and rice husks (chaff); and the term old paper containing a large amount of cellulose fibers refers to used newspapers and magazines. The term "plant fiber stuffing material" used in the embodiments is a collective term for the fiber plants and the old paper.

Preferable ratios of mixing fiber plants and old paper for the stuffing of plant fibers into the above-described rotting organic matter, are shown hereunder.
Example 1
   Fish Bones & Innards: 5kg; Old paper: 4kg; Rice bran: 1kg
Example 2
   Brassica japonica: 5kg; Old paper: 3kg; Rice bran: 1 kg
Example 3
   Raw rubbish: 5kg; Rice husks (chaff): 2.5kg; Rice bran: 3kg
Example 4
   Pruned branches: 5kg; Old paper: 1 kg; Rice bran: 1kg
Example 5
   Brassica japonica: 5kg; Dried straw: 3 kg; Rice bran: 1 kg
Example 6
   Chinese radish leaves: 5kg; Dried straw: 3kg; Rice bran: 1kg
Example 7
   Beancurd refuse: 5kg; Old paper: 4kg

If, as shown in the above examples 1 to 6, rice bran is added, the multiplication of aerobic bacteria present in large numbers at the periphery is promoted. Accordingly, by adding rice gran when compost is formed by fermentation of the processed products, the need to add expensive bacteria can be avoided. On the other hand, if, as in the case of the above example 7, organic material containing protein is used as the raw material, then the organic material itself causes the aerobic bacteria to multiply, and there is no need to add any rice gran.

It is preferable that the dried straw mentioned above be first cut into pieces of about 1cm before being introduced into the processing equipment described later. Furthermore, there is hardly any difference in effect if the weights cited in the above examples are increased or decreased by up to 1kg (e.g. 4-6 kg in the case of 5kg of fish bones & innards; 3-4 kg in the case of 4kg of old paper). Indeed, it is desirable to adjust the weights depending on differences in the water content of the fish bones & innards etc..

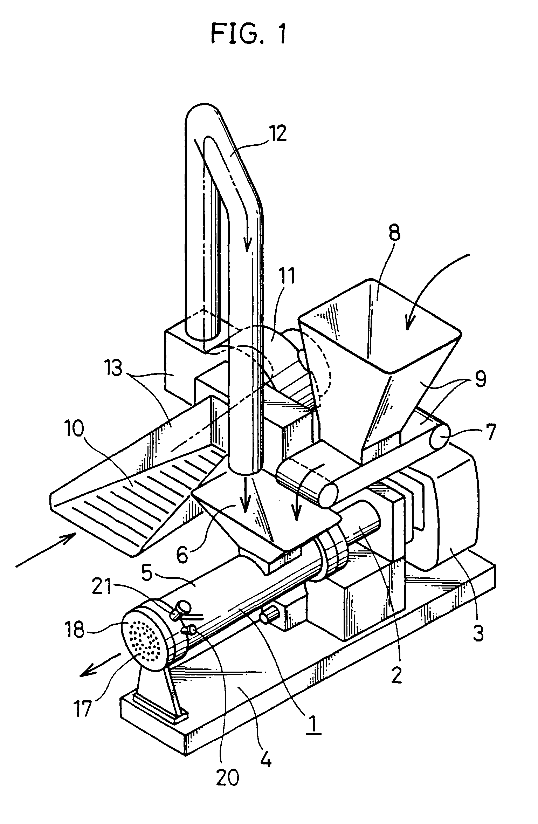

Next, the construction of the processing equipment used in the production method of the present invention, in which plant fibers are stuffed into the rotting organic matter, shall be described with reference to Figures 1 to 4.

### Overall construction of the Processing Equipment

As shown in Figure 1, the processing equipment used for the stuffing of fibers and for the formation of pellets, comprises a cylindrical pellet extrusion screw unit 1. A rotation drive unit 3 on top of base 4 is securely attached thereto, via the rotation shaft 2 of the pellet extrusion screw.

A part of the outer surface of the cylindrical casing 5 of pellet extrusion screw unit is cut away, and a feed hopper 6 is provided directed into the casing for feeding the raw materials for the raw fertilizer. On one side of area above the opening of the feed hopper 6, there is located an endless conveyor 7, and above this endless conveyor 7, there is provided a hopper 8, which together constitute the fiber material supply unit 9. On the other side of the opening of the feed hopper 6, there is located a rotting matter supply device 13 constructed from a feed slope 10, a cutter 11 connected to the feed slope 10, and a feed pipe 12 having one end attached to cutter 11, and bent such that the other end is positioned above the feed hopper 6.

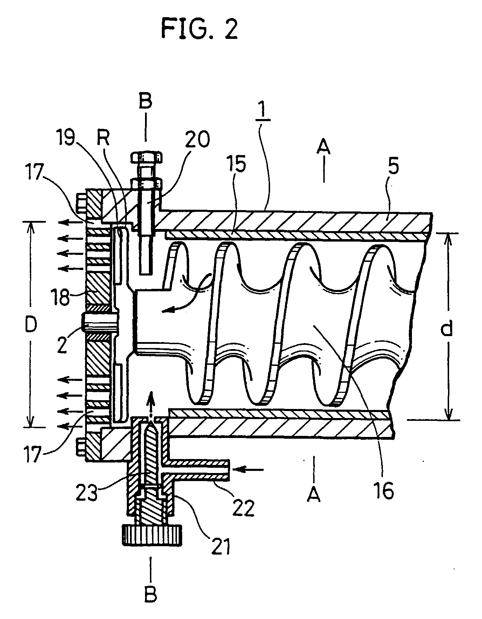

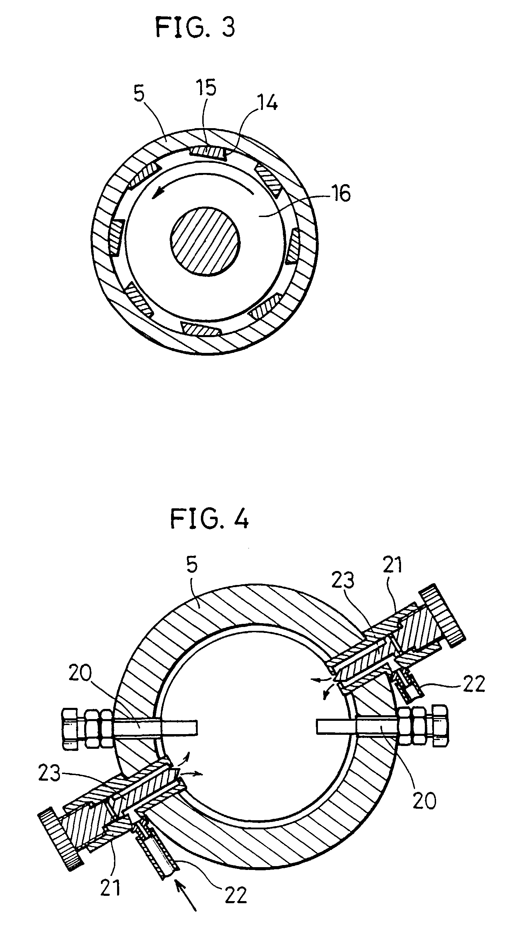

To describe the equipment in more detail, liners 15, 15.... are fastened by screws to the inner surface of casing 5 at 8 positions separated by regular intervals around the circumference. These liners 15, 15... are prism shaped and one of the angles 14 on the inner side thereof is an acute angle (see figure 3). At the center of the casing 5 and inside of these liners, a spiral shaped extrusion screw 16 is provided to rotate about rotation shaft 2. At the front of the casing 5 opposite from the location of the rotation drive unit 3, a grind plate 18, having pellet forming holes 17, 17... formed therein, is securely provided in the radial direction as a forming die. Furthermore, the pellet forming holes located in the most outward circumferential area are formed in positions which connect with the position of the most outwards circumferential area of the cutter rotation chamber R (inner diameter D) which has been formed to have a larger diameter than the inner diameter, d of the casing 5 (see figure 2). The pellet forming cutter 19 is attached to the rotation shaft 2 of extrusion screw 16 so as to rotate against the inner surface of grind plate 18.

The rotation stopping drag bars 20(projections) are deeply screwed in towards the forefront of the extrusion screw 16 from the outer surface of the casing 5, and are arranged such that the tip thereof is deeply thrust into an intermediate position between the above-described extrusion screw 16 and the pellet forming cutter 19.

The water supply valve 21 (water supply device) is a needle valve type. A water pipe 22, which connects to the outside, is connected to one side of the main body of the needle valve, and needle valve 23 is screwed into the main body. The tip of the needle valve 23 is arranged so as to face into the inside of the casing 5 between the extrusion screw 16 and the pellet-forming cutter 19. The flow of water from outside into the casing 5 is adjusted by the extension and retraction of the needle valve 23 through rotation thereof.

As shown in Figure 4, the rotation stopping drag bars 20 are arranged opposite each other in the radial direction of the casing. The water supply valves 21 are also arranged opposite each other, but are arranged to be displaced at an angle from the rotation stopping drag bars 20 in the circumferential direction.

Hereunder, there shall be provided a detailed explanation with respect to the construction of each part of the processing equipment.

### Construction of the Rotation Stopping Drag Bars

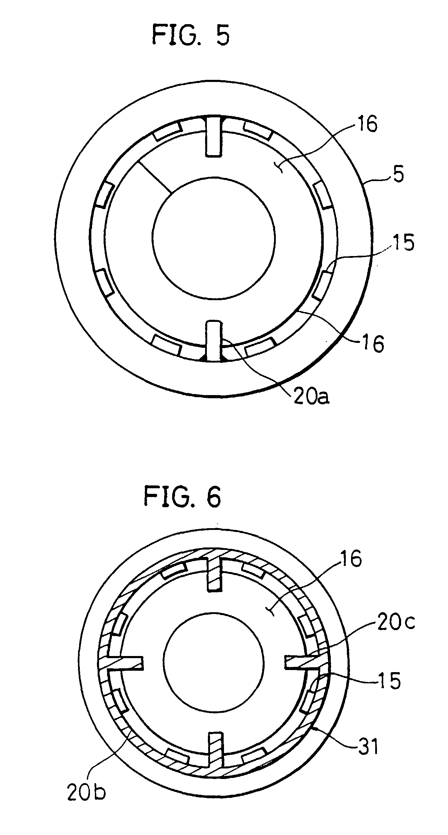

Figures 5 to 8 show the construction of the rotation-stopping drag bars 20.

One feature of the processing equipment of the present invention is that it does work by finely crushing the fibers, but rather works by untangling the entanglement of fibers by tearing them apart. The act of subjecting relatively soft fiber material to swelling-softening treatment using a single screw pressure crusher was already known in the prior art (for example, Japanese Patent Application Publication No. Sho 52-1118), but a device for applying pressure to, and kneading two different kinds of materials i.e. fiber material and rotting organic matter, as in the present invention had not been realized. This was because it had not been possible to (i) subject organic matter containing tough fiber material by a single screw pressure crusher and without causing loading, and (ii) heat the matter to be processed by the pressure action of the screw. It should be noted that although the problem of loading can be resolved by increasing the size of the exit holes of the exit section, this causes a reduction in the degree of swelling-softening/crushing, and also makes it impossible to heat the matter to be processed.

Usually, matter which had passed down the screw, was not untangled into a single fiber, but still comprised a mass of many fibers. Furthermore, this mass tended to continue to rotate due to the rotating action of the screw. Also, since the exit holes formed in the forming die were formed in the direction of the axis of the casing, if the processed matter happened to have, as described above, a large velocity component in the rotation direction, then there was the inconvenience that the matter would not pass through the exit holes, but instead continue to rotate round and round whilst continuing to be pressed against the inner surface of the forming die. This kind of phenomenon caused loading of the exit holes. It is reasonable to suppose that the rotating direction velocity component of the processed matter could have been reduced by lowering the rotation speed of the screw, but such a method would result in a reduction in the force with which the matter is extruded out through the exit holes, and there was thus still no way to resolve the problem of loading.

In the present invention, with which this problem may be solved, a plurality of rotation-stopping drag bars 20 are provided to project from the inner wall of the casing 5 towards the space formed between the grind plate 18 and the blade front portion of the extrusion screw 16, whereby loading is prevented and stable operation can be realized. A lack of resistance towards the forefront of the extrusion screw 16, would mean that the processed product would reach the grind plate 18 without any loss in its velocity component in the rotation direction. If long fibers are included in large amounts in such matter, the rotating movement of the matter hinders the passage of the matter through the pellet forming holes of the grind plate 18, with the result that loading can easily occur. Through the arrangement in the circumferential direction of a plurality of rotation-stopping drag bars 20 which act against the rotation of the processed product, the problem of loading can be resolved.

Since the above-described rotation-stopping drag bars 20 are screwed into the casing, it is possible to adjust the amount by which they radially project into the casing 5, thereby making it possible to adjust the level of resistance. Accordingly, with such a construction, it is possible to achieve a level of resistance ideally suited to the degree of dryness and the type of matter to be processed. However, this is not the only construction; the rotation-stopping drag bars 20 can also be secured to the inner wall of the casing by welding in order to simplify the construction. Furthermore, as shown in Figure 6, it is also possible to secure a plurality of rotation stopping drag bars 20c to a ring-shaped tool 20b such that they are directed towards the center of the tool thereof, and then fit the thus constructed ring-shaped tool 20a to the inside of the casing 5. The number of rotation-stopping drag bars 20 should be selected appropriately taking into consideration the scale of the processing equipment and the type of matter to be processed. Furthermore, in figures 5 and 6, a cross section of the rotation-stopping drag bars 20a, 20c can have a circular, oval, square or rectangular shape etc..

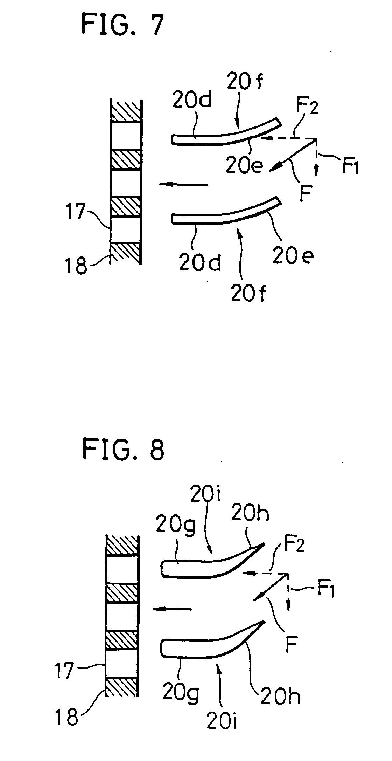

Figures 7 and 8 show another example of a construction for the projections. The projections in figure 7 are constructed of a plate 20f comprising a surface 20d parallel to the axis of the casing 5, and a curved face 20e which is bent in the opposite direction to the rotation velocity F₁ direction of the processed matter. In figure 8, the projections are constructed from a plate 20i having a face 20g parallel to the axis of the casing, and a cuneiform face 20h which is bent in the opposite direction to the rotation speed F₁ direction of the processed matter. Furthermore, the tip of the front of the parallel face 20g is rounded to smoothen the flow of the processed matter.

The constructions shown in Figures 7 and 8 act to resist against the rotation movement of the processed matter without providing any resistance to the movement of the processed matter in the feed direction. Furthermore, the construction shown in Figure 8 functions rather more effectively than the construction shown in Figure 7, since it offers less resistance in the feed direction. In the figures, the reference symbol F₂ shows the velocity of the processed matter in the feed direction, and the symbol F shows the velocity of the processed matter. Furthermore, it is also possible to fix a plurality of these kinds of plates to the kind of ring shaped tool 20a discussed earlier.

### Construction of the Water Supply Valve

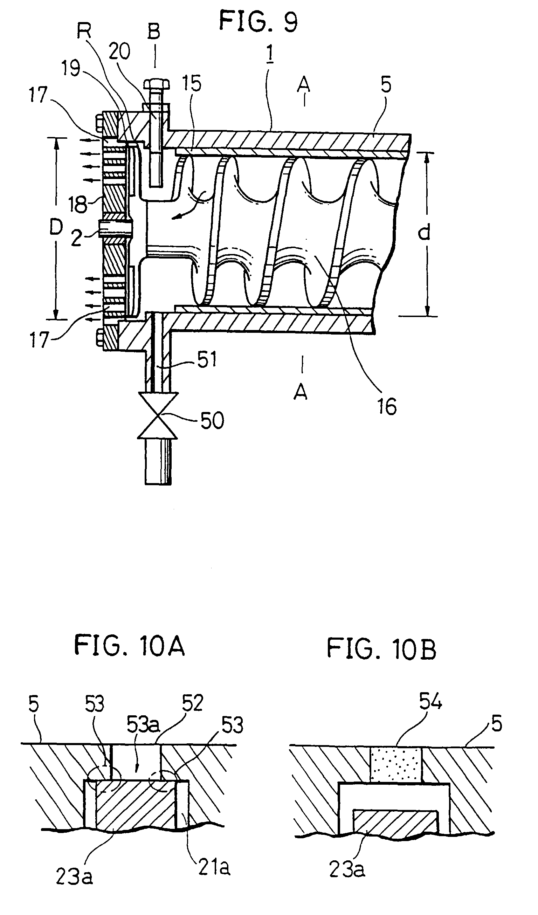

Next, Figures 9 to 16 show the construction of the water supply valve 21.

In the prior art, water was supplied in order to smoothly convey the matter to be processed. However, in experiments in which weeds were treated, it was observed that it was possible to run the processing equipment without supplying any water, due to the fact that weeds which prosper from summer to autumn (tall goldenrod (Solidago altissima), mugwort (Artemisia indica), arrowroot (Puerania thunbergiana) etc.) contain a fair amount of water. It was also observed that weeds which prosper in spring or waterside weeds have an excessive water content, and that it was conversely necessary to absorb water by adding strings of paper or pellets produced from strings of paper. For the above reasons, there was a demand for a device with which water is not always supplied but with which the supply and cut-off of water can be controlled, and this lead to the constructions for a water supply valve shown in the embodiments of the present invention. Furthermore, it is required that the processed matter cannot penetrate into the water supply outlet or piping system, when the supply of water is cut-off.

Figure 9 shows the normally considered construction for a water supply pipe for adjusting the water content of the processed matter in the casing 5. With this construction, when the processing equipment is operated continuously with the valve 50 closed, processed matter collects inside the passage 51 above the valve, with the problem that even if the valve is subsequently opened, the collected processed matter acts as a plug making it impossible to supply water to the inside of the casing. If this kind of problem occurs, there is no choice but to dismantle the processing equipment and remove the collected matter.

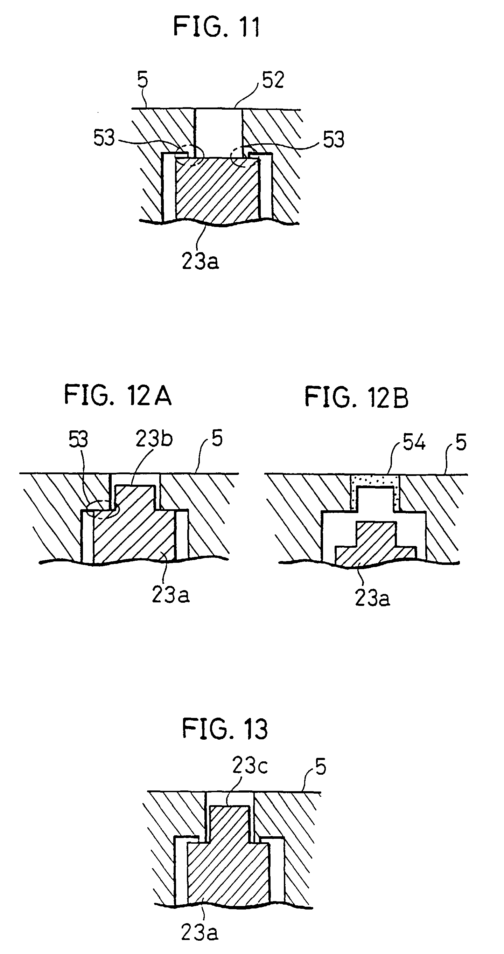

As shown in Figures 10 and 11, the water supply valve of the present invention, with which this kind of problem can be solved, has a construction in which a partition component 53 (circular partition plate 53) for partitioning off the valve chamber 21a of the water supply valve from the casing 5, is provided near the water outlet 52. Accordingly, even if processed matter collects inside the water outlet 52, the thickness of the collected matter will be small, and this collected matter can be eliminated immediately by the water pressure when the water supply is turned on (see Figure 10(b)). In the figures, 23a is the needle valve which moves up and down (forwards and backwards).

Figure 12 shows another example for the shape of the partition component. With the construction shown in Figures 10 and 11, it is possible to provide the water outlet in a high pressure position.

Figures 12 and 13 show constructions in which a projection 23b, 23c is formed at the end of the needle valve 23a, such that the thickness of processed matter which collects on the end of the needle valve 23a can be further reduced.

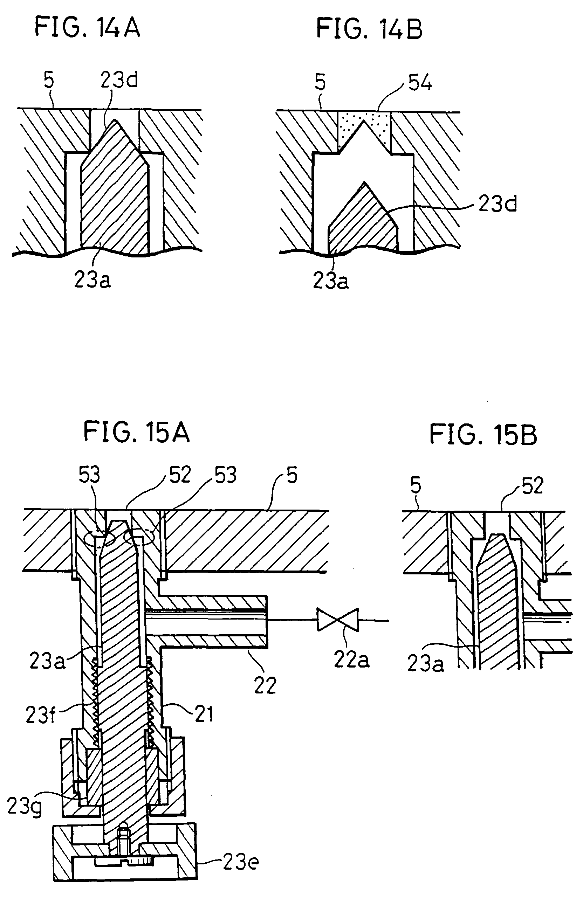

Figure 14 shows a construction in which the end of the needle valve has been made to have a pointed cone shape, whereby the thickness of collected matter at the center section is reduced thereby making the destruction and elimination of the collected matter rather easier.

Figure 15 shows the construction of water supply valve in further detail. It is a manually operated type valve. In this figure, if handle 23e is turned, then the needle valve is moved forward due to the screw fit between the male screw formed on the central portion of the shaft of the needle valve 23a and the female screw formed on the water supply valve 21. This forward or backward movement of the needle valve 23a causes the opening or closing of the seal section 53. In this figure, (a) shows the seal section in a closed condition, and (b) shows the seal section in an opened condition. Furthermore, in the figures, 23f shows the screw fit, and 23g shows the seal section at the lower end of needle valve 23a.

If, as in figure 15(a), an extra water supply main valve 22a is provided in the water pipe 22 of the water supply valve 21, then the supply of water can be assuredly shut off should it occur that the seal section 53 ceases to provide a complete seal. It is predicted that fibers will become caught in the seal section 53, when the equipment is used to process matter containing large amounts of fiber over a long period of time. However, if water supply main valve 22a is provided, there will be no occurrence of unwanted water leaking into the casing 5, and it is also possible to prevent the intrusion of processed matter into the water pipe, should the seal section 53 cease to provide a complete seal. A cheap commercially available ON/OFF type valve may be used as the above-described water supply main valve 22.

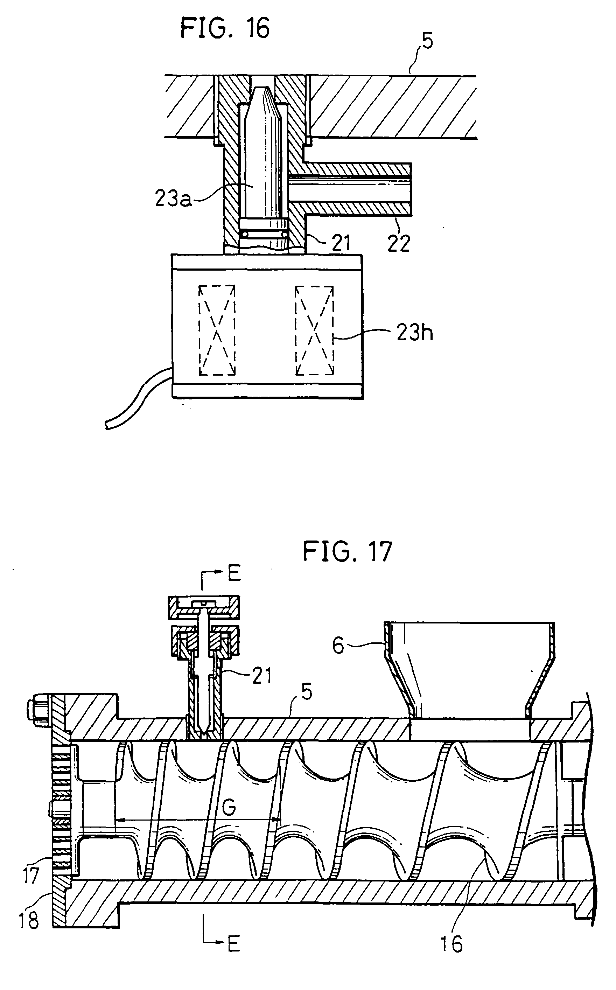

Figure 16 shows the construction of an automated type water supply valve. The valve is constructed such that the needle valve 23a is moved up and down by controlling an electric signal to electromagnetic coil 23h. With this construction, it is possible to switch the water supply valve 21 on and off from a remote position, thereby making it possible to run the equipment automatically. Accordingly, it is possible to meet demands for automatic operation when the size of the processing equipment is increased through the employment of an electric motor or engine powered system.

### Position of the Water Supply Valve

Figures 17 to 20 describe the position of the water supply valve(s).

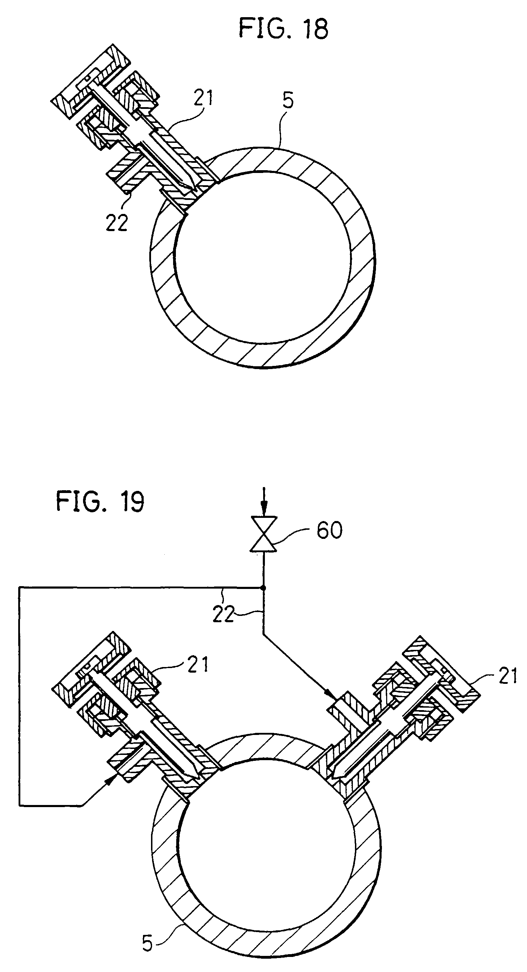

Figure 17 is a frontal cross-sectional view for explaining the position of the water supply valve 21. Figure 18 is a view of a cross-section taken through line E-E in Figure 17. In both these figures, water supply valve 21 is located in a position within 3 pitches from the forefront of extrusion screw 16, i.e. in a position towards the front end of casing 5 wherein pressure is generated through the conveying action of extrusion screw 16.

In the area of the casing 5 close to the feed hopper 6, the matter to be processed is transported with a spiral movement along the axis of the casing 5 with the rotation of extrusion screw 16, but there are no compression forces acting on the matter at this stage. The matter to be processed becomes subject to pressure as it thereafter moves axially forward the casing. Normally, when matter having a low water content, such as strings of paper and rice husks (chaff), in a device having provided a forming die with extrusion holes, water is added in order to avoid the holes from becoming blocked. However, in systems wherein water is sprayed from the feed inlet, or systems wherein water is injected from a casing provided next to the feed inlet, it occurs that the screw starts to compress the matter before the matter and the water have been sufficiently kneaded together, with the result that the added water is squeezed out by the compression action.

If, in order to solve this problem, the water supply valve 21 is provided in a position within 3 pitches from the forefront of extrusion screw 16, as in an embodiment of the present invention, the screw length from the position of water supply is short, and thus the increase in pressure can be restrained due to the increase in fluidity of the processed matter. There is thus no occurrence of the added water being squeezed out from the processed matter thereby making it possible to solve the problem of the blocking of the pellet forming holes 17.

Figure 19 shows a construction in which a pair of water supply valves 21 are positioned in the same cross-sectional plane of the casing 5, and the water pipe 22 of each of the pair of the water supply valves is connected to a common main valve 60. It is also possible to provide more than 2 water supply valves 21. With this construction, it is even possible to deal with an increase in the diameter of the blades of the extrusion screw 16, and an increase in the amount of water added with the aim of increasing the processing capability. Furthermore, in such a case, the fact that water can be added from a plurality of positions means that the kneading efficiency is increased.

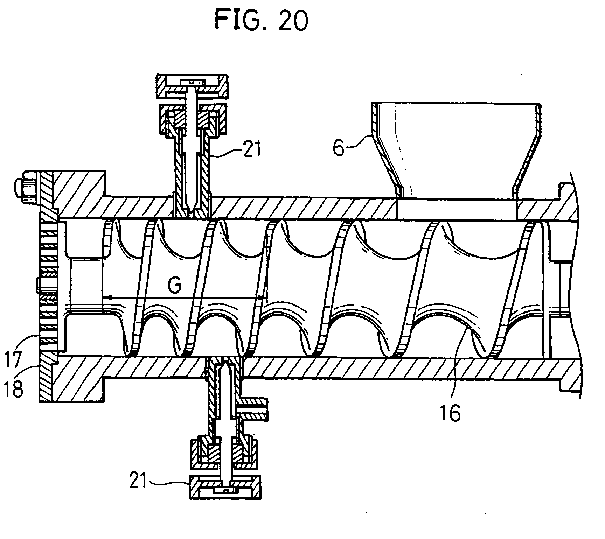

Figure 20 shows a construction in which the water supply valves are provided at different positions in the axial direction of the casing 5, within the range of 3 pitches from the forefront of the extrusion screw 16. For example, for paper strings it is preferable to add the water at a position close to the forefront of extrusion screw, whilst on the other hand, for rice husks (chaff), it is preferable to add the water at a position rather towards the feed hopper 6 rather than a position towards the forefront of the extrusion screw. Suitable kneading can be realized by making it possible to change the position at which the water is added for such different types of matter to be processed.

Furthermore, as is shown in previous Figure 2, with a construction in which the water supply valve 21 is provided in the space between the grind plate 18 and the forefront of the extrusion screw 16, the processed matter itself, which has been compressed and conveyed forward in the casing, functions as a kind of plug inside the casing 5, and thus the water supplied from water supply valve does not flow towards feed hopper 6. As a result, a kneading effect can be realized without any occurrence of water being squeezed out of the processed matter.

Further, when the extrusion screw is rotated in the backwards direction, it is possible to expel the processed matter from the casing 5. A more detailed explanation is given hereunder. The extrusion screw 16 is usually rotated in the backwards direction when blocking has occurred. However, although matter which is present between the blades of the screw can be thus conveyed back to the position of the feed hopper 6, processed matter which is present between the forefront of the screw and the grind plate cannot be conveyed backwards, and remains as a hard mass. However, if the water supply valve 21 is provided in the position shown in Figure 2, then the above-described hard mass of matter can be softened by the supply of water, and it is possible to expel the mass of processed matter which had collected in the above-described space through the pellet forming holes 17 by rotating the extrusion screw 16 in the forward directing after the hard mass has been softened. Accordingly, the problem of blocking can be resolved without having to dismantle the processing equipment.

### Construction of the casing and grind plate

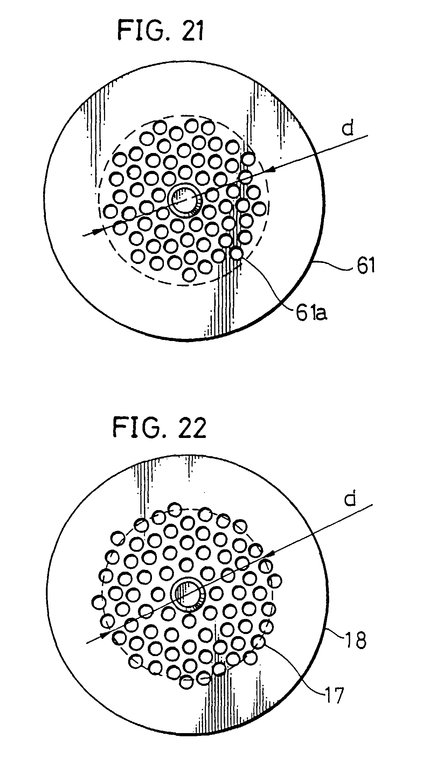

Figures 21 to 27 provide a detailed explanation of the grind plate 18 and the construction of the casing 5 to which the grind plate is secured.

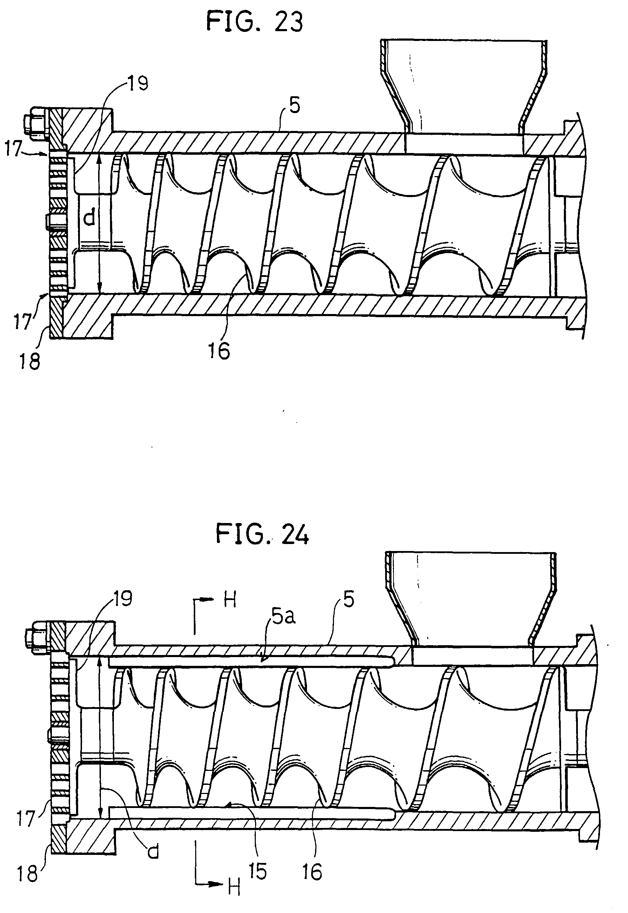

Figure 21 shows the construction of a standard forming die 61. A large number of holes 61a are formed radially inwards of the internal diameter of the casing 5. With this construction, as one moves towards the inner wall of the casing 5, the number of holes decreases with a consequent reduction in the area of opening. As a result, it has been observed that the processed matter, which is conveyed forward in the casing 5 whilst rotating in a spiral manner under pressure, collects towards the inner wall of the casing 5 under the action of centrifugal forces. In particular, with matter containing large amounts of fibers, specifically, organic matter such as grass, pampas or pruned branches etc., there is the problem when processing that the fluidity is deteriorated due to the length and strength of these fibers. Furthermore, with this construction, if the diameter of the exit holes is increased, the area of opening towards the inner wall of the casing 5 is dramatically reduced. In contrast thereto, with the processing equipment of the present invention, a plurality of pellet forming holes 17 are formed outwards of the internal diameter of the casing 5, as shown in the construction of the grind plate 18 shown in Figure 22, and the frontal cross-sectional view of the processing equipment shown in Figure 23. With such a construction, a sufficient degree of exit passage is ensured even for that matter which has been conveyed along the inner wall of the casing 5, and the flow of the processed matter at the inner wall of the casing 5 becomes smooth, with the result that blocking tends not to occur. The construction shown in Figure 23 is a basic construction for improving the flow of processed matter at the inner wall of the casing 5, and provides satisfactory results only with respect to the formation of pellets and kneading of the processed matter. Accordingly, when matter which contains large amounts of fibers and thus has a poor fluidity is to be processed, it is necessary to provide a liner 15 on the inner wall of the casing 5 as shown in Figure 2, to thereby form grooves on the inner wall of the casing 5. In this way, the matter containing large amounts of fibers, can be softened and crushed effectively, and can be smoothly transported forward in casing 5 by extrusion screw 16.

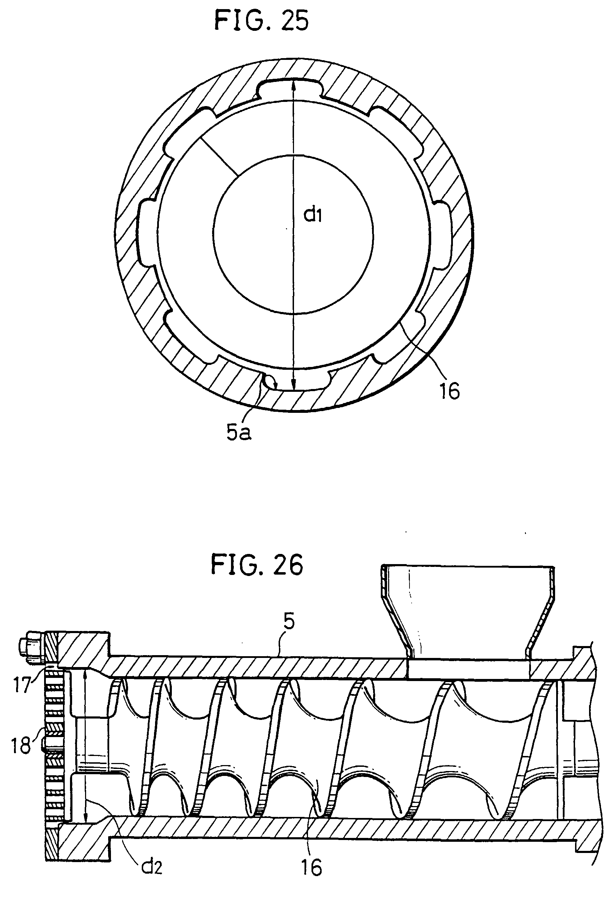

Figure 24 shows a construction in which linear grooves 5a have been formed directly on the inner wall of the casing 5 in the axial direction, instead of the liner shown in Figure 2. Figure 25 shows a view of a cross-section taken through line H-H in Figure 24. In Figure 25, when the diameter of the circle connecting the bottom of each groove 5a is taken as d₁, the outer pellet forming holes 17 are formed further outwards than d₁.

Figure 26 shows a construction in which the internal diameter of the front end of the casing 5 has been increased (reference to internal diameter d₂ in the figure), and the pellet forming holes 17 of grind plate 18 are located further outwards than the increased internal diameter d₂. With this construction, matter which has passed along the length of the extrusion screw 16 moves into a flow passage whose cross-sectional area has been increased due to the section having an increased internal diameter, whereby its axial velocity is decreased, with the result that it is directed smoothly and gently to the grind plate 18. Furthermore, since the pellet forming holes 17 are formed at a position further outwards than internal diameter d₂, a further smoothened flow of matter can be realized in addition to the effect of preventing blocking with the construction shown in Figure 24, and thus a smooth exit can be achieved for even processed matter which contains large amounts of fibers and thus has poor fluidity.

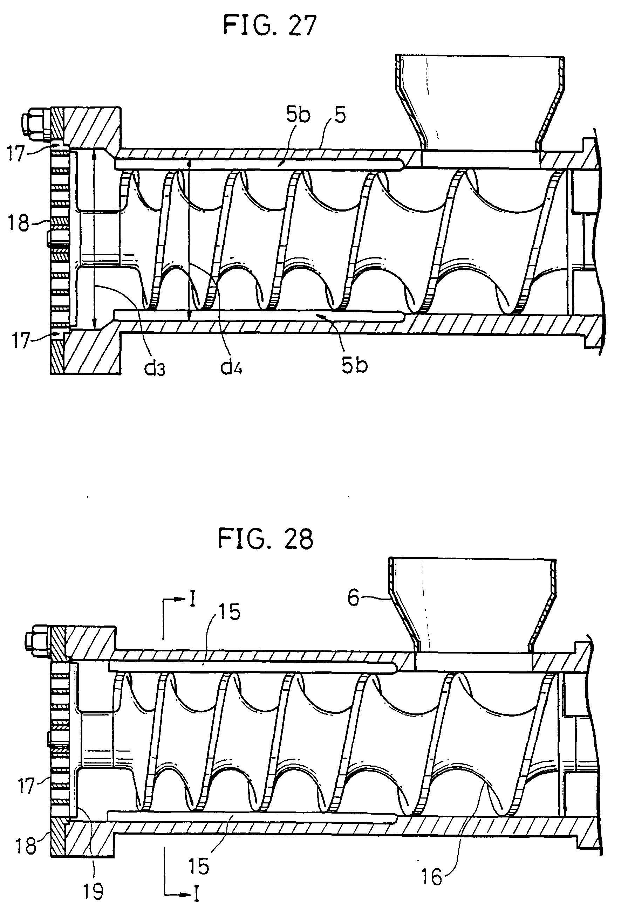

Figure 27 shows a construction in which a plurality of linear grooves 5b are provided at regular intervals around the circumference of the inner wall of the casing 5, in addition to the construction shown in Figure 26. The position of these grooves 5b is the same as shown in Figure 25. In Figure 27, the internal diameter of the front end of the casing has been enlarged to d₃, wherein d₃ is greater than d₄, which is the internal diameter of the circle connecting the valley portions of the grooves 5b. The pellet forming holes 17 towards the outer circumference of the grind plate 18 are located further outwards than internal diameter d₃. With this construction, it is possible to effect swelling-softening treatment whilst preventing blocking, and to realize a smooth flow of matter. It is thus suitable for assuredly and stably processing, in particular, organic matter containing fibers in large amounts.

### Construction of the Inner Wall of the Casing

Figures 28 to 35 show constructions for the casing inner wall having a liner 15.

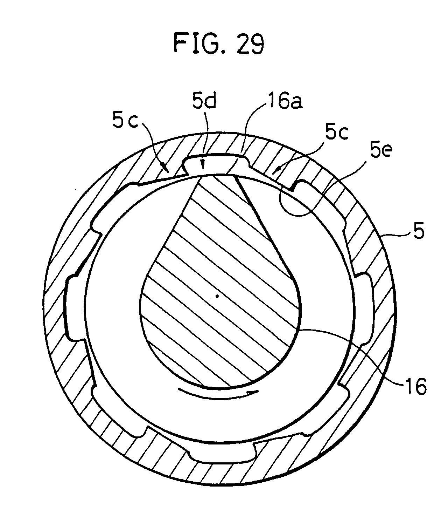

Figure 28 is a front cross-sectional view of the relationship between the extrusion screw 16 and the projections 5c of the liner 15. Figure 29 is a view of a cross-section taken through line I-I in Figure 28. In both these two figures, the projections 5c are comprised of eight straight or spiral projecting ridges formed in the direction of the axis of the casing. Each projection 5c is formed on the inner wall of the casing at regular intervals when viewed in the cross-sectional direction of the casing. Between each of the projections 5c is formed a grooved section 5d. As shown in Figure 29, each projection is formed to have a diagonal slope 5e such that the height of the projection becomes smaller in the direction of the rotation of the extrusion screw 16. In the figures, 16a designates the top face of the edge of the extrusion screw 16. The projections 5c and grooves 5d shown in Figure 29 may be formed by machining or by casting. In the present embodiment, the projections 5c are formed as 8 projecting ridges, but the number of projections may be selected appropriately in accordance with the diameter of the extrusion screw 16.

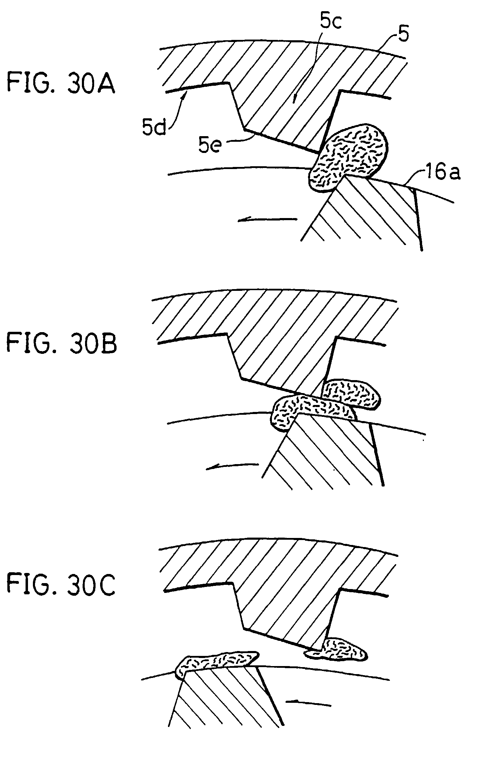

Figure 30 is in explanation of interaction of the projections 5c when the extrusion screw 16 is rotated in the forward direction. Processed matter caught between the edge of the extrusion screw 16 and a projection 5c when the extrusion screw 16 is rotated in the forward direction (see figure (a)) is broken up by being ripped apart (see figure (b)) and softened and crushed (see figure (c)). Furthermore, the projections 5c are formed to have an acute angle at the right-hand tip thereof by the formation of slope 5e, to thereby have an increased ripping effect. Furthermore, since the projections 5c are formed to have slopes 5e, then in the arrangement shown in Figure 30(b), the gap between the top face 16a of the ridge of extrusion screw 16 and the slope face 5e gets wider. Accordingly, the frictional forces acting on the processed matter caught in the gap do not get higher, such that the processing equipment can be operated at low power.

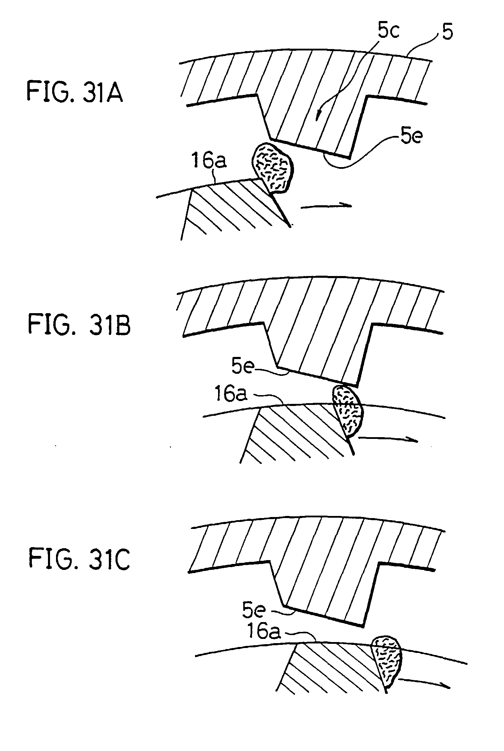

Figure 31 shows the action of the projections 5c when the extrusion screw 16 is rotated in the reverse direction. When the projection 5c comes close to the edge of the extrusion screw 16, then since the distance between the left hand tip of the projection 5c and the right hand tip of the edge of the extrusion screw 16 is large, the processed matter moves into the space between the blades of the extrusion screw 16 without being ripped apart, and is returned towards the feed hopper 6 with further reverse rotation of the extrusion screw 16. Accordingly, the load at the time of reverse rotation does not become high, and consequently a high power is not required to drive the screw. As shown in Figures (b) to (c), when the slope face 5e and the top face 16a are in positions facing each other, compression forces act on the processed matter, but these compression forces mainly act towards the low pressure side (low pressure side when the extrusion screw is rotated in the forward direction), and thus work to promote the backwards transport of the processed matter.

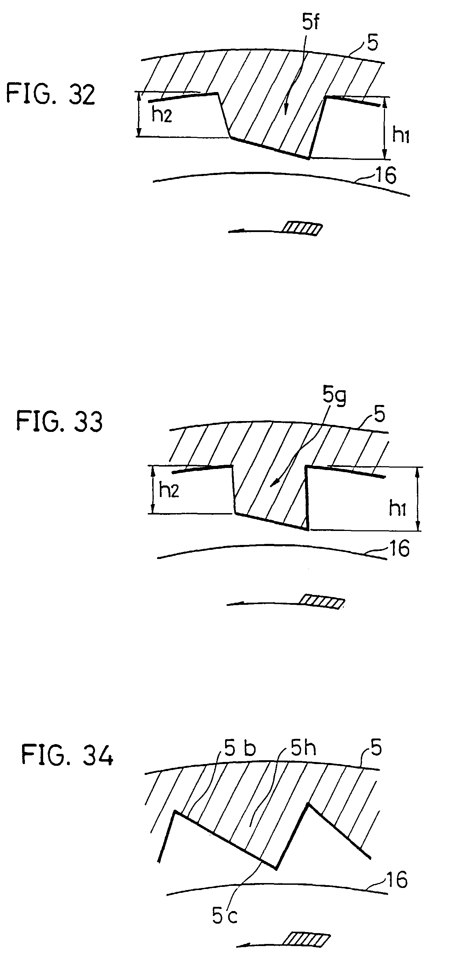

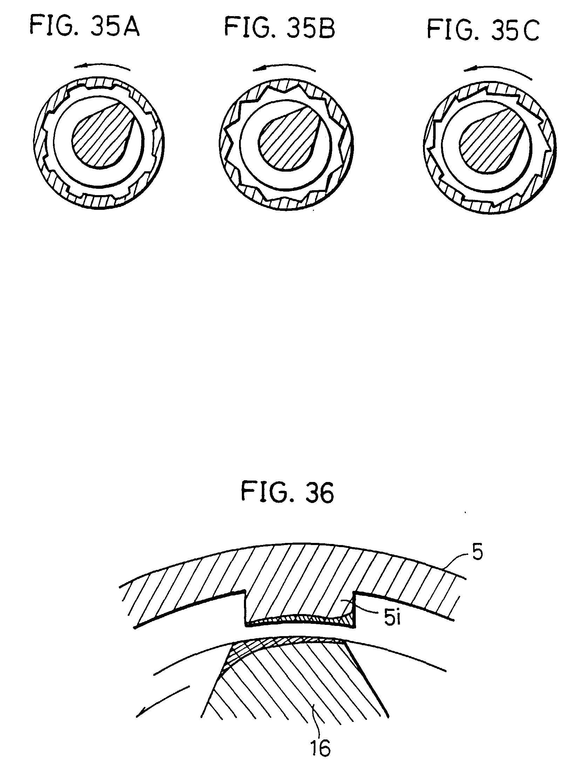

Figures 32 to 34 show other possible shapes for the projections. The projection 5f shown in Figure 32 is constructed to have the shape of a stand whose ends have been cut diagonally. By employing such a stand-shape, it becomes easier to integrally form the casing and the projections by casting. With respect to the projection 5g shown in Figure 33, the large height of the projection makes it possible to make the edge of projection 5g rather sharper, and thus to further improve the ripping effect when the extrusion screw is rotated in the forwards direction. Figure 34 shows a construction wherein the projections 5h are formed to have a saw-tooth shape. In contrast thereto, with the groove-shapes employed in the prior art as shown in Figure 35, i.e. the recessed type shown in Figure 35(a), the valley-shaped type shown in Figure 35(b), and the type shown in Figure 35(c) wherein the gap gets wider in the opposite direction to the direction of rotation of the extrusion screw 16, the swelling-softening/crushing effect is not sufficient; and although the processed matter can be conveyed towards the forefront of the extrusion screw, it cannot be conveyed back in the opposite direction. As a result, it was necessary to dismantle the processing equipment every time blocking occurred, and accordingly it was only possible to process specific types of matter such as wheat (barley) straw etc.. However, with the projections shown in the embodiments of the present invention, these faults have been resolved thereby relieving the necessity to select a particular type of matter for processing.

### Exchangeable liner

Figures 36 to 40 provide a description regarding the construction of the exchangeable liner 15.

The reason for using a liner which is exchangeable is to make it possible to deal with the excessive wear of the edge of the tips of the liner, when working with tough matter such as rice husks (chaff) or pruned branches.

In the prior art, rice husks (chaff) were piled up outside and burnt over a period of three days. However, environmental pollution is regulated by law, it impossible to freely carry out such incineration processing , and thus the processing of rice husks (chaff) has become a pressing problem for farmers. If the rice husks (chaff) itself can be crushed to less than one-third of its original size, then it can be mixed with the fodder for cattle and used as a digestive, or it can be spread on the fields. The decomposition time in the ground is thus reduced. Furthermore, the rice husks (chaff) can also be made into compost if it is softened and crushed. However, since the main components are prone to wear as described above, there is no device for processing rice husks (chaff) which is being widely used.

On the other hand, with respect to pruned branches, pruning is carried out every year at fruit orchards, parks, and areas having roadside trees, and the pruned branches are either piled up and left to wither, incinerated or buried in the ground. As with rice husks (chaff), this way of processing pruned branches presents problems. Pruned branches can be made into compost in a short period of time if they are first softened and crushed. However, due to the fact that they are harder than grass and tend to wear away the main components of the processing equipment, it is necessary to find some way of dealing with this problem of wear. As shown in Figure 36, when this kind of hard material is processed, the projections 5i projecting from the inner wall of the casing 5 and the ridge sections of the extrusion screw 16 are subject to wear, with the result that the swelling-softening/crushing effect becomes weaker and weaker. The exchangeable liner of the present invention overcomes these problems.

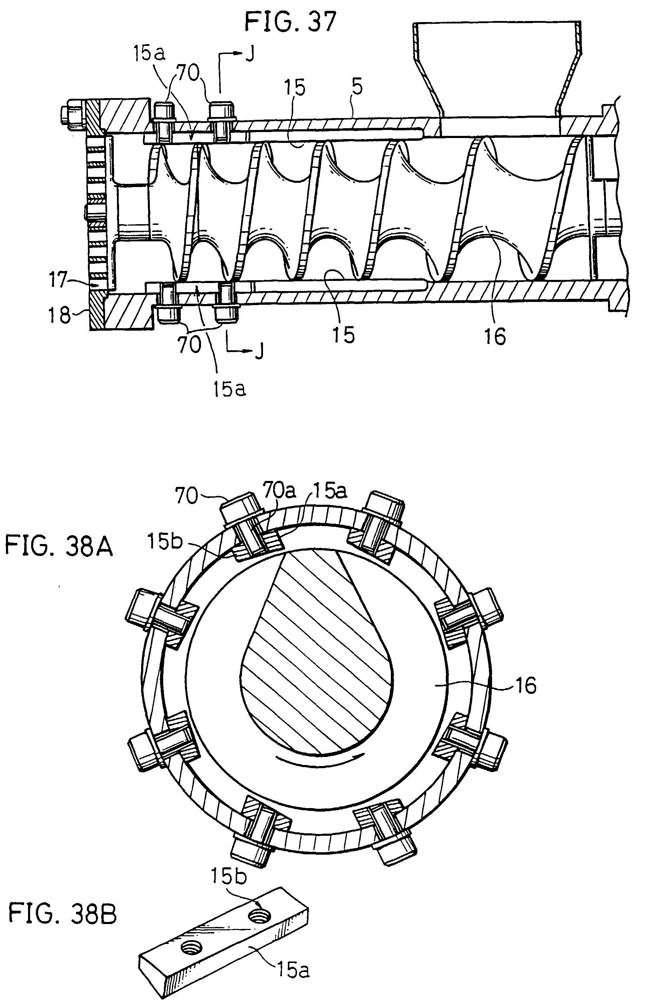

Figure 37 shows a frontal cross-sectional view of a device fitted with an exchangeable liner. Figure 38 is a view of a cross-section taken through line J-J in Figure 37. In both these figures, liner 15 is fixed on the inner wall of the casing 5, and as an extension of this liner 15, short length exchangeable liners 15a are provided in positions corresponding to the front end section of the extrusion screw 16. These exchangeable liners 15a are positioned at regular intervals in the circumferential direction of the casing 5. Female screws 15b are formed in each exchangeable liner 15a, and the exchangeable liners 15a are secured to the casing 5 by screwing the male screw portion 70a of a pair of bolts which pass through the casing 5 into the female screws 15b of the exchangeable liners 15a. Figure 38(b) shows a liner 15a which has been separated from the casing 5.

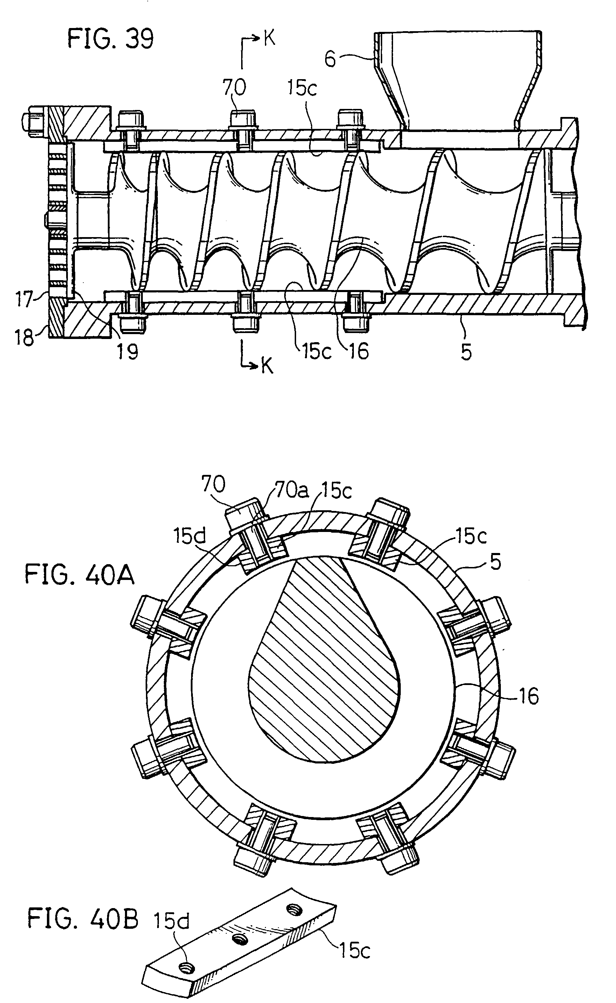

Figure 39 and 40 show a construction in which the whole liner 15c can be fitted to and taken off the casing 5. Female screws 15d are formed in each of the exchangeable liners 15c, and the exchangeable liners 15c are secured to the casing 5 by screwing the male screws 70a formed on 3 bolts 70, which pass through the wall of the casing 5 into the female screws 15d formed in the exchangeable liners 15c. With this construction, it is impossible to convey the processed matter backwards by rotating the extrusion screw 16 in the reverse direction, but the effect of preventing wear of the liner by the processed matter can be realized. Figure 40(b) shows an exchangeable liner 15c which has been separated from the casing 5.

### Exchangeable Construction of the Front of Screw

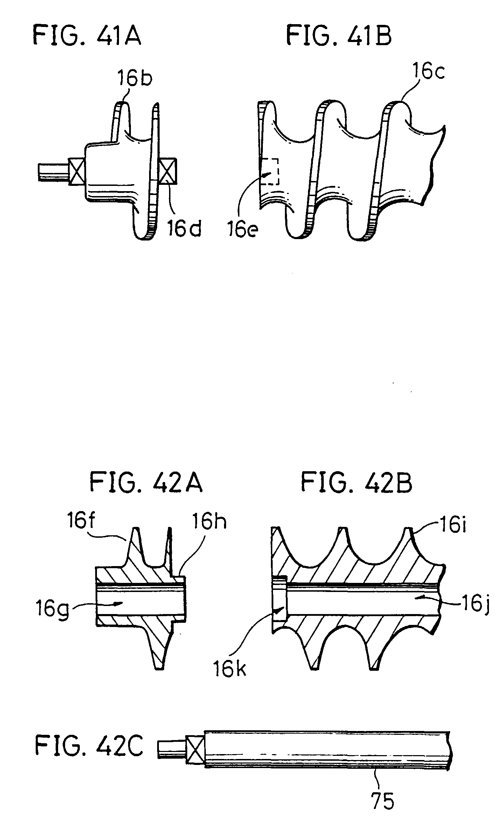

Figures 41 and 42 show constructions in which the front of screw is a segmented type and can be taken on and off the main body of the screw, with the aim of dealing with wear to the front of the extrusion screw 16.

In figure 41, the extrusion screw 16 is constructed from a forward screw 16b and a base screw 16c connected to forward screw 16b. The tail of the blade on the forward screw 16b and the head of the blade on the base screw 16c are designed such that the screw phase of the extrusion screw is in accord when the two parts are connected together. To this end, a box-shaped projection 16d is formed on the axial portion of the forward screw which is connected to the base screw, and a box-shaped hole 16e, into which box-shaped projection 16d can fit, is formed in the side of the base screw which connects to the forward screw.

Figure 42 shows a variation of the construction shown in Figure 41. In figure 42, the forward screw 16f has a through hole 16g, and is formed with a square edged projection 16 at the portion thereof which connects with the base screw. On the other hand, the base screw 16i also has a through hole 16j having the same axis as the through hole 16g, and is formed with a square shaped hole 16k, into which the projection 16h can be fitted, in the portion thereof which is connected to the forward screw. The extrusion screw 16 is completed by connecting these two parts together, and sliding a shaft 75 into the through holes 16g, 16j.

By adopting such a construction in which the front of the extrusion screw can be exchanged, it is possible to always maintain the swelling-softening/crushing ability of the processing equipment at a fixed level. Furthermore, it is also possible to construct the forward screw from a hard wearing material, and to construct the base screw from a cheap material. Such a segmented screw as arranged in the casing 5 is shown in Figure 39. The part of the screw to the left of the screw segment line shown in Figure 39 is the forward screw, and the part to the right thereof is the base screw.

The pitch of the extrusion screw 16 of the present invention gets denser towards the front of the extrusion screw, and the compression ratio can be selected in accordance with the type of matter to be processed.

When a relatively large size processing equipment is constructed using a rotation screw whose number of screw pitches, N is 7 or greater, with the aim of increasing the compression ratio by increasing the number of screw pitches, it is preferable to arrange the outlet of the water supply valve in a position within N/2 pitches of the tip of the rotation screw. With such a construction, the swelling-softening performance and crushing performance can be improved in line with the increase in size.

Furthermore, with the construction in which grooves are formed at regular intervals around the circumference of the inner wall of the casing of a processing equipment whose screw pitch gets denser from the feed hopper towards the exit, it is preferable to locate the outlet of the water supply valve in a position within 3 pitches from the tip of the screw where the screw pitch is dense. Such a processing equipment having regularly-spaced grooves and a water supply valve provided in the front part of the casing inner wall, has improved swelling-softening performance and crushing performance, as well as improved kneading performance.

### Method of Production of the Raw Organic Fertilizer

Next, the method of producing raw organic fertilizer using the above-described processing equipment shall be explained.

Rotting organic matter, for example, 5kg of fish bones and innards, and 1kg of rice bran is supplied to the supply slope 10 at one side of the processing equipment shown in Figure 1. From the other hopper 8 is fed 4kg of dried fiber plants cut into 10cm pieces. The fish bones and innards are cut into pieces by cutter 11, travel along feed pipe 12 and enter the pellet extrusion screw device 1 from feed hopper 6. On the other hand, the fiber plants are carried by the conveyor belt to feed hopper 6 from where they are introduced into the pellet extrusion screw device 1. The fish bones and innards and fiber plants which have been introduced into the pellet extrusion screw device 1 move into the spiral groove of the rotating extrusion screw 16, and are conveyed towards the front end of casing 5 whilst rotating in a spiral manner. The fish innards and bones and fiber plants thus move forwards whilst being crushed as they are sandwiched between the outer circumference of the spiral of the screw and the liner 15; are further ground up by the compression forces resulting from the forwards pushing force of the extrusion screw 16; and the plant fibers of the fiber plants are forcibly stuffed into the fish bones and innards with the help of the increase in temperature in the casing 5 to about 80-90^{o}C caused by the compression forces resulting from the forwards pushing force of the extrusion screw 16. If used paper is fed to the pellet extrusion screw instead of fiber plants, then plant fibers made up of cellulose fibers from the used paper are stuffed into the fish bones and innards.

When the fish bones and innards, which have been stuffed with plant fibers, have been fed towards the grind plate 18 by the forward pushing force of the extrusion screw 16, the rotation thereof is immediately restrained by the rotation-stopping drag bars 20 and the pushing force of the pellet extrusion screw 16 in a direction parallel to the rotation shaft 2 acts effectively. In this state, the matter is cut by rotating cutter 19, and is extruded through the pellet forming holes 17, whereby it is formed into pellets. At this time, it is preferable to operate the water supply valve 21 to supply water, particularly when the plant fibers are extremely dried, since it smoothens the formation of the pellets. Furthermore, since the matter contains large amounts of plant fibers, and therefore tends to greatly move under the influence of the rotating centrifugal forces of the cutter 19, it is preferable to locate the outermost pellet forming holes in positions within an area further outwards than the internal diameter of the casing 5.

The most preferable organic fertilizer can be obtained, in the way described above, by mixing the rotting organic matter, and the plant fiber stuffing material used to stuff plant fibers into the organic matter, described in Examples 1-6, and then processing the mixture in the above-described processing equipment. However, the rotting organic matter and the plant fiber stuffing material are not necessarily limited to those types shown in Examples 1-6.

Furthermore, the present invention is not limited in application to the above-mentioned fish bones and innards, but is also suited to the processing of raw rubbish, pruned branches etc..

Furthermore, in the agricultural field, not only is it possible to produce organic fertilizer, but it is also possible to produce compost raw materials. For example, let us consider the case of pruned branches as an example: if the swelling-softening treatment using the processing equipment of the present invention is carried out rather than the standard compost production method in which cutting is carried out using a chipper, then the fermentation time can be reduced to 1/2 to 1/3 of the time required with the conventional methods. To explain in more detail, if the swelling-softening treatment of the present invention is carried out, then even tough tree branches can be softened by the destruction of the structure of the branch, with a consequent large increase in the surface area, and thus both the air permeability and absorbence thereof can be increased, with the result that the fermentation time can be reduced. Accordingly, it is effective in the production of compost raw materials.

## Claims

1. An organic raw fertilizer including plant fibers characterized in that it is obtainable by mixing 25-55 parts by weight of crushed dried plant fiber material containing large amounts of cellulose and lignin fibers etc., and 0-20 parts of rice bran with 50 parts of crushed organic matter, and mashing and forcibly stuffing the fibers in said plant fiber material into the organic matter, and forming pellets therefrom.

2. An organic raw fertilizer including plant fibers characterized in that it is obtainable by mixing 25-55 parts by weight of crushed used paper containing large amounts of cellulose fibers, and 0-20 parts of rice bran with 50 parts of crushed rotting organic matter, and mashing and forcibly stuffing the cellulose fibers in said used paper into the organic matter, and forming pellets therefrom.

3. A method for producing organic raw fertilizer characterized by the steps of: introducing plant fiber material and chopped organic matter into a cylindrical casing; pressurizing and kneading said plant fiber material and said organic matter by the rotation of a rotating screw provided inside said casing; ripping apart and mashing up said organic matter including said plant fiber material through the interaction thereof with the edges of a plurality of grooves formed on the inner surface of the casing in the direction of the axis of the casing; stuffing said plant fiber material into said organic matter whilst conveying it towards the forming die; restraining the rotation of the plant fiber material-containing organic matter by projections arranged in the vicinity of the inner side of the forming die; extruding the plant fiber material- containing organic matter through forming holes in specified amounts using a cutter which rotates against the inner face of the forming die, to form it into pellets.

4. The method of production according to claim 3, wherein the rotation chamber in which said cutter is located has been formed to have an enlarged internal diameter larger than the internal diameter of the casing; the forming holes towards the outer circumference of the forming die have been formed at positions radially outwards of the inner surface of the casing; and wherein the organic matter containing plant fiber material which has been conveyed along the face of the inner wall of the casing is extruded from the circumferentially outer forming holes.

5. A processing equipment in which organic matter and plant fiber material is introduced into a cylindrical casing, has pressure applied thereto and kneaded by the rotation of a rotating screw provided inside said casing, is conveyed to the front end of the casing and expelled from the front end of the casing; said processing equipment comprising:
a forming die provided at said front end and having forming holes for forming the kneaded plant fiber material-containing organic matter into pellets;
a water supply device provided at said front end for supplying water to the inside of the casing;
a cutter provided on the axis of said rotating screw to rotate in a condition to contact with the inner face of said forming die; and
a plurality of projections provided to project from the inner wall of said casing towards the space formed between said forming die and the forefront of said screw blade.

6. The processing equipment according to claim 5, wherein the water outlet of said water supply device is provided in a position within 3 pitches from the forefront of said rotation screw.

7. The processing equipment according to claim 5, wherein the water outlet of said water supply device is positioned to face the space formed between said forming die and the forefront of said rotation screw.

8. The processing equipment according to claim 5, wherein the number of screw pitches, N of said rotation screw is 7 or greater; and the water outlet of said water supply device is provided at a position within N/2 screw pitches from the forefront of said rotation screw.

9. The processing equipment according to any one of claims 5 to 8, wherein said water supply device comprises a pipe passing through the wall of said casing; a water outlet provided at end of the pipe towards said casing; and a needle valve contained within said pipe for adjusting the flow of water; wherein said water outlet comprises a circular partition plate which is closed and opened by the forward movement and backward movement of said needle valve.

10. The processing equipment according to claim 5, wherein said projections are screwed into the casing, and whose amount of projection into the inside of the casing can be adjusted.

11. The processing equipment according to claim 5, wherein said projections are formed from plate-shaped members, whose flat surface is parallel to the axial direction of said casing.

12. The processing equipment according to claim 5, wherein the forming holes which located towards the outer circumference of said forming die, are formed at positions radially outwards of the inner surface of the casing.

13. The processing equipment according to claim 5, wherein a plurality of straight or spiral grooves are formed on the inner wall of the casing in the axial direction of the casing.

14. The processing equipment according to claim 13, wherein said grooves are formed by arranging a plurality of ridge liners in the circumferential direction of the casing, and wherein at least some or all of said liners are exchangeable.

15. The processing equipment according to claim 13 or 14, wherein the top surface of the projections formed between said grooves are sloped to become lower in the direction of rotation of said rotating screw.

16. The processing equipment according to any one of claims 13 to 15, wherein the screw pitch of said rotating screw becomes denser towards the forefront thereof, and said grooves are arranged at regular intervals in the cross-sectional direction of said casing, and wherein the water outlet of said water supply device is provided at a position within 3 pitches from the forefront of the screw, where the screw pitch is dense.

17. The processing equipment according to claim 5, wherein said rotation screw is comprised of a forward rotation screw and a base rotation screw which are connected together such that the screw phase of each are in accord.
